# EUROPEAN PATENT APPLICATION

(11) **EP 2 949 819 A1**
(43) Date of publication of application: **02.12.2015**
(21) Application number: 13872298.8
(22) Date of filing: 25.01.2013
(51) Int. Cl.: E02F 9/22, E02F 9/02

(54) **DRIVING CONTROL DEVICE OF CONSTRUCTION MACHINE**

(71) Applicant: Volvo Construction Equipment AB, 631 85 Eskilstuna (SE)
(72) Inventor: PARK, Hyung-Seok, Changwon-si Gyeongsangnam-do 642-765 (KR)
(74) Representative: Stöckeler, Ferdinand
(86) International application number: PCT/KR2013/000593
(87) International publication number: WO 2014/115911

(57) **Abstract**

Disclosed is a driving control device for securing the operability at the beginning of driving by operating a driving operation device so as to prevent the quick start of equipment at the time of starting. A driving control device of a construction machine, according to the present invention, comprises: a hydraulic pump; a driving motor; a control valve provided to a path between the hydraulic pump and the driving motor and controlling the starting, stopping and direction conversion of the driving motor at the time of conversion; a driving speed selection valve provided to a path between a pilot pump and the driving motor and controlling the swivel angle of the swash plate of the driving motor at the time of conversion; a driving operation device provided to a path between the pilot pump and the control valve and outputting second signal pressure for converting the control valve at the time of operation; an operation amount detection means for detecting the operation amount of the driving operation means; and a control unit for outputting control signals to the driving speed selection valve such that the driving motor is converted to a low speed state if the operation amount of the driving operation device, which is detected by the operation amount detection means, is smaller than a preset set value, and the driving motor is converted to a high speed state if the operation amount of the driving operation device is larger than the preset set value.

## Description

### TECHNICAL FIELD

The present invention relates to a traveling control apparatus for a construction machine. More particularly, the present invention relates to such a traveling control apparatus for a construction machine in which the sudden start of the construction machine can be prevented at an initial start stage when the traveling operation of the construction machine is initiated through the manipulation of a traveling manipulation device, thereby securing manipulability at the initial start stage.

### BACKGROUND OF THE INVENTION

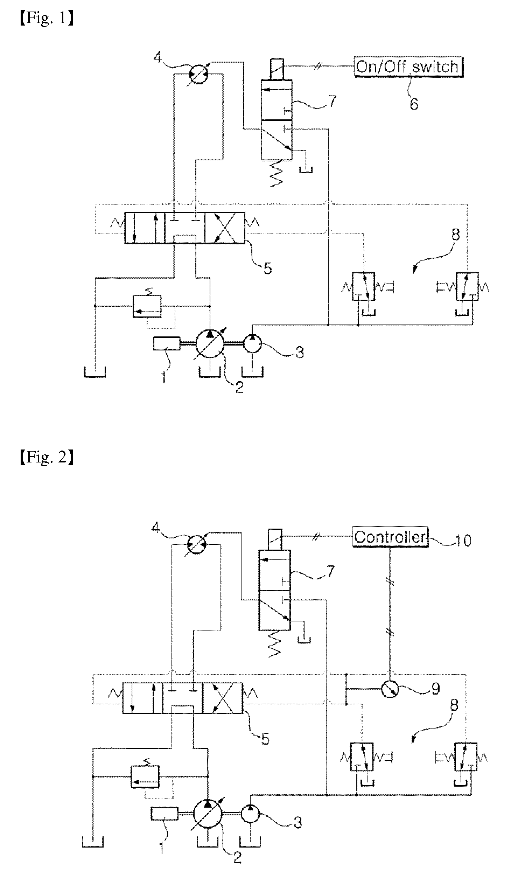

A conventional flow control apparatus for a construction machine in accordance with the prior art as shown in Fig. 1 includes:
a variable displacement hydraulic pump (hereinafter, referred to as "hydraulic pump") 2 and a pilot pump 3, which are connected to an engine 1;
a variable displacement traveling motor (hereinafter, referred to as "traveling motor") 4 that is connected to the hydraulic pump 2;
a control valve 5 that is installed in a flow path between the hydraulic pump 2 and the traveling motor 4 and is configured to be shifted to control a start, a stop, and a direction change of the traveling motor 4;
a traveling speed selection switch 6 that is configured to select any one of a low-speed traveling operation and a high-speed traveling operation;
a traveling speed selection valve 7 that is installed in a flow path between the pilot pump 3 and the traveling motor 4 and is configured to be shifted to control a swivel angle of a swash plate of the traveling motor 4; and
a traveling manipulation device 8 that is installed in a flow path between the pilot pump 3 and the control valve 5 and is configured to be manipulated to output a secondary signal pressure to shift the control valve 5.

When the traveling speed selection switch 6 is manipulated by an operator to select a high-speed traveling mode, an electrical control signal from the traveling speed selection switch 6 is applied to the traveling speed selection valve 7 to cause a spool of the traveling speed selection valve 7 to be shifted to the bottom on the drawing sheet. For this reason, the swivel angle of a swash plate of the traveling motor 4 is controlled to a minimal angle by a pilot signal pressure that is discharged from the pilot pump 3 and passes through the traveling speed selection valve 7.

In this case, when the traveling manipulation device 8 is manipulated by the operator, the pilot signal pressure that is discharged from the pilot pump 3 is converted into a secondary signal pressure corresponding to the manipulation amount of the traveling manipulation device 8. A spool of the control valve 5 is shifted in response to the secondary signal pressure passing through the traveling manipulation device 8 so that hydraulic fluid discharged from the hydraulic pump 2 is supplied to the traveling motor 4 via the control valve 5 to cause the construction machine to travel.

As described above, in the case where the high-speed traveling mode is selected and then the traveling manipulation device 8 is manipulated to start the construction machine, the traveling motor 4 is in a state in which the swivel angle of the swash plate thereof is converted into a minimal angle, i.e., the capacity of the traveling motor 4 is converted into a small capacity state. Thus, even if the traveling manipulation device 8 is slightly manipulated, the construction machine is started suddenly due to the high-speed rotation of the traveling motor 4. In particular, in the case where the traveling operation of the construction machine is initiated to move the construction machine on a steep sloping site, the construction machine is maintained in an unstable state, thus causing the occurrence of a safety accident.

As a result, since the operator manipulates the traveling manipulation device 8 in a state of focusing a frontward attention at the initial stage when the traveling operation of the construction machine is initiated, a fatigue by the operator' s manipulation and drive may be weighed, thus causing damage to the operator' s health.

In addition, the conventional traveling control apparatus for a construction machine entails a problem in that when the construction machine is started suddenly due to an erroneous manipulation of traveling manipulation device at the initial traveling stage, an operation sense of the operator is reduced and the operator is embarrassed momentarily, thus resulting in an occurrence of a secondary safety accident.

### SUMMARY OF THE INVENTION

Accordingly, the present invention has been made to solve the aforementioned problems occurring in the prior art, and it is an object of the present invention to provide a traveling control apparatus for a construction machine, in which in the case where a high-speed traveling mode is selected to start the construction machine, a swivel angle of a swash plate of a traveling motor is controlled to correspond to the manipulation amount of a traveling manipulation device so that the sudden start of the construction machine is prevented at the initial start stage when the traveling operation of the construction machine is initiated, thereby securing safety the operator and improving an operation sense of the operator.

### TECHNICAL SOLUTION

To achieve the above object, in accordance with an embodiment of the present invention, there is provided a traveling control apparatus for a construction machine, including:
an engine;
a variable displacement hydraulic pump and a pilot pump, which are connected to the engine;
a variable displacement traveling motor connected to the hydraulic pump;
a control valve installed in a flow path between the hydraulic pump and the traveling motor and configured to be shifted to control a start, a stop, and a direction change of the traveling motor;
a traveling speed selection valve installed in a flow path between the pilot pump and the traveling motor and configured to be shifted to control a swivel angle of a swash plate of the traveling motor;
a traveling manipulation device installed in a flow path between the pilot pump and the control valve and configured to be manipulated to output a secondary signal pressure that shifts the control valve;
a manipulation amount detection means configured to detect a manipulation amount of the traveling manipulation device; and
a controller configured to output a control signal to the traveling speed selection valve so as to shift the traveling motor to a low-speed state if the manipulation amount of the traveling manipulation device that is detected by the manipulation amount detection means is equal to or smaller than a preset value and to shift the traveling motor to a high-speed state if the manipulation amount of the traveling operation device 8 is larger than the preset value.

A pressure sensor may be used as the manipulation amount detection means.

A hydraulic traveling manipulation pedal may be used as the traveling manipulation device.

### ADVANTAGEOUS EFFECT

The traveling control apparatus for a construction machine in accordance with the present invention as constructed above has the following advantages.

In the case where a high-speed traveling mode is selected to start the machine, the swivel angle of the swash plate of the traveling motor is controlled to correspond to the manipulation amount of the traveling manipulation device so that the sudden start of the construction machine is prevented at the initial start stage when the traveling operation of the construction machine is initiated, thereby improving an operation sense and health of the operator and reducing a fatigue according the manipulation and drive to secure safety and reliability.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a hydraulic circuit diagram showing a traveling control apparatus for a construction machine in accordance with the prior art; and
Fig. 2 is a hydraulic circuit diagram showing a traveling control apparatus for a construction machine in accordance with a preferred embodiment of the present invention.

### * Explanation on reference numerals of main elements in the drawings *

1: engine
2: hydraulic pump
3: pilot pump:
4: traveling motor:
5: control valve:
7: traveling speed selection valve:
8: traveling manipulation device:
9: manipulation amount detection means:
10: controller:

### DETAILED DESCRIPTION OF THE INVENTION

Now, a traveling control apparatus for a construction machine in accordance with a preferred embodiment of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

In order to definitely describe the present invention, a portion having no relevant to the description will be omitted, and through the specification, like elements are designated by like reference numerals.

In the specification and the claims, when a portion includes an element, it is meant to include other elements, but not exclude the other elements unless otherwise specifically stated herein.

Fig. 2 is a hydraulic circuit diagram showing a traveling control apparatus for a construction machine in accordance with a preferred embodiment of the present invention.

Referring to Fig. 2, the traveling control apparatus for a construction machine in accordance with an embodiment of the present invention includes:
an engine 1;
a variable displacement hydraulic pump (hereinafter, referred to as "hydraulic pump") 2 and a pilot pump 3, which are connected to the engine 1;
a variable displacement traveling motor (hereinafter, referred to as "traveling motor") 4 that is connected to the hydraulic pump 2;
a control valve 5 that is installed in a flow path between the hydraulic pump 2 and the traveling motor 4 and is configured to be shifted to control a start, a stop, and a direction change of the traveling motor 4;
a traveling speed selection valve 7 that is installed in a flow path between the pilot pump 3 and the traveling motor 4 and is configured to be shifted to control a swivel angle of a swash plate of the traveling motor 4;
a traveling manipulation device 8 that is installed in a flow path between the pilot pump 3 and the control valve 5 and is configured to be manipulated to output a secondary signal pressure that shifts the control valve 5;
a manipulation amount detection means 9 that is configured to detect a manipulation amount of the traveling manipulation device 8; and
a controller 10 that outputs a control signal to the traveling speed selection valve 7 so as to shift the traveling motor 4 to a low-speed state (i.e., the capacity of the traveling motor 4 is switched to a large capacity state) if the manipulation amount of the traveling manipulation device 8 that is detected by the manipulation amount detection means 9 is equal to or smaller than a preset value and to shift the traveling motor 4 to a high-speed state (i.e., the capacity of the traveling motor 4 is switched to a small capacity state) if the manipulation amount of the traveling operation device 8 is larger than the preset value.

A pressure sensor may be used as the manipulation amount detection means 9.

A hydraulic traveling manipulation pedal may be used as the traveling manipulation device 8.

In this case, a configuration of the traveling control apparatus for a construction machine in accordance with an embodiment of the present invention is the same as that of the conventional traveling control apparatus for a construction machine as shown in Fig. 1, except the manipulation amount detection means 9 that detects the manipulation amount of the traveling manipulation device 8 upon the manipulation of the traveling manipulation device 8 and outputs a detection signal to the controller 10, and the controller 10 that outputs a control signal to the traveling speed selection valve 7 to control the swivel angle of a swash plate of the traveling motor 4 depending on the manipulation amount of the traveling manipulation device 8. Thus, the detailed description of the same configuration and operation thereof will be omitted to avoid redundancy, and the same hydraulic parts are denoted by the same reference numerals.

In accordance with the configuration as described above, in the case where the traveling manipulation device 8 is manipulated by an operator, a pilot signal pressure discharged from the pilot pump 3 is converted into a secondary signal pressure to correspond to the manipulation amount of the traveling manipulation device 8. A spool of the control valve 5 is shifted to the left or right on the drawing sheet in response to the secondary signal pressure generated by the manipulation of the traveling manipulation device 8 so that hydraulic fluid which is discharged from the hydraulic pump 2 and passes through the control valve 5 drives the traveling motor 4 to cause the construction machine to travel.

In this case, the traveling manipulation amount detection means 9 detects the manipulation amount that is input thereto to shift the control valve 5 by the manipulation of the traveling manipulation device 8, and outputs a detection signal corresponding to the detected manipulation amount of the traveling manipulation device 8 to the controller 10. For this reason, the controller 10 compares a pressure value corresponding to the manipulation amount that is input thereto from the manipulation amount detection means 9 with a preset pressure value that is previously stored in the controller 10.

In other words, if the manipulation amount of the traveling manipulation device 8 is equal to or smaller than the preset value, a spool of the traveling speed selection valve 7 is shifted to a state shown in Fig. 2 in response to an electrical control signal output from the controller 10. As a result, the traveling motor 4 is maintained in a low-speed traveling state through the control of the swivel angle of a swash plate of the traveling motor 4, and thus the volume of the traveling motor 4 is not reduced.

Thus, even in the case where the traveling speed selection switch (not shown) is manipulated to select the high-speed traveling mode and then the traveling manipulation device 8 is manipulated, the swivel angle of a swash plate of the traveling motor 4 is controlled to correspond to the manipulation amount of the traveling manipulation device 8 to cause the traveling motor 4 to be shifted to a low-speed traveling state. Consequently, the construction machine can start slowly at the initial stage when the traveling operation of the construction machine is initiated.

On the other hand, if the manipulation amount of the traveling manipulation device 8 is larger than the preset value, the spool of the traveling speed selection valve 7 is shifted to the bottom on the drawing sheet in Fig. 2 in response to an electrical control signal output from the controller 10. As a result, the traveling motor 4 is shifted to a high-speed traveling state by a signal pressure from the pilot pump 3 through the control of the swivel angle of a swash plate of the traveling motor 4, and thus the volume of the traveling motor 4 is reduced.

Thus, in the case where the traveling speed selection switch (not shown) is manipulated by the operator to select the high-speed traveling mode to perform the traveling operation of the construction machine and then the traveling manipulation device 8 is manipulated, the swivel angle of a swash plate of the traveling motor 4 is controlled to correspond to the manipulation amount of the traveling manipulation device 8 to cause the traveling motor 4 to be shifted to a high-speed traveling state. Consequently, the hydraulic fluid discharged from the hydraulic pump 2 to correspond to the manipulation amount of the traveling manipulation device 8 is supplied to the traveling motor 4 so that the traveling speed is increased and thus the construction machine can travel at high speed.

### INDUSTRIAL APPLICABILITY

In accordance with the traveling control apparatus for a construction machine of the present invention as constructed above, the swivel angle of the swash plate of the traveling motor is controlled to correspond to the manipulation amount of the traveling manipulation device. Thus, even in the case where the high-speed traveling mode is selected to start the construction machine, the construction machine can start and travel in the low-speed traveling mode at the initial start stage when the traveling operation of the construction machine is initiated. In addition, if the manipulation amount of the traveling manipulation device exceeds the preset value, the construction machine travels at an increased traveling speed so that an operation sense and health of the operator can be improved and a fatigue according the manipulation and drive can be reduced.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the spirit and scope of the present invention. Therefore, the true technical scope of the present invention should not be defined by the above-mentioned embodiments but should be defined by the appended claims and equivalents thereof.

## Claims

1. A flow control apparatus for a construction machine comprising:
an engine 1;
a variable displacement hydraulic pump 2 and a pilot pump 3, which are connected to the engine 1;
a variable displacement traveling motor 4 connected to the hydraulic pump 2;
a control valve 5 installed in a flow path between the hydraulic pump 2 and the traveling motor 4 and configured to be shifted to control a start, a stop, and a direction change of the traveling motor 4;
a traveling speed selection valve 7 installed in a flow path between the pilot pump 3 and the traveling motor 4 and configured to be shifted to control a swivel angle of a swash plate of the traveling motor 4;
a traveling manipulation device 8 installed in a flow path between the pilot pump 3 and the control valve 5 and configured to be manipulated to output a secondary signal pressure that shifts the control valve 5;
a manipulation amount detection means 9 configured to detect a manipulation amount of the traveling manipulation device 8; and
a controller 10 configured to output a control signal to the traveling speed selection valve 7 so as to shift the traveling motor 4 to a low-speed state if the manipulation amount of the traveling manipulation device 8 that is detected by the manipulation amount detection means 9 is equal to or smaller than a preset value and to shift the traveling motor 4 to a high-speed state if the manipulation amount of the traveling operation device 8 is larger than the preset value.

2. The traveling control apparatus according to claim 1, wherein a pressure sensor is used as the manipulation amount detection means 9.

3. The traveling control apparatus according to claim 1, wherein a hydraulic traveling manipulation pedal is used as the traveling manipulation device 8.
